# EUROPÄISCHE PATENTSCHRIFT

(11) **EP 0 769 897 B1**
(45) Veröffentlichungstag und Bekanntmachung des Hinweises auf die Patenterteilung: **02.06.1999**
(21) Anmeldenummer: 95923116.8
(22) Anmeldetag: 04.07.1995
(51) Int. Cl.: A01G 9/12

(54) **PFLANZSTAB-FIXIEREINRICHTUNG**
FIXING DEVICE FOR PLANT SUPPORTING ROD
DISPOSITIF DE FIXATION POUR TIGE DE SUPPORT DE PLANTE

(30) Priorität: 05.07.1994 AT 1324/94
(43) Veröffentlichungstag der Anmeldung: 02.05.1997
(73) Patentinhaber: in products Vertriebs-GmbH, 2483 Ebreichsdorf (AT)
(72) Erfinder: PAYR, Hubert, A-2483 Ebreichsdorf (AT)
(74) Vertreter: Kopecky, Helmut, Dipl.-Ing. Kopecky & Schwarz Patentanwälte
(86) Internationale Anmeldenummer: AT9500142
(87) Internationale Veröffentlichungsnummer: WO9601039

(56) Entgegenhaltungen:
- EP-A- 0 058 738
- DE-A- 2 323 763
- FR-A- 2 541 076
- FR-A- 2 678 476

## Beschreibung

Die Erfindung betrifft eine Pflanzstab-Fixiereinrichtung, mit einer einen ins Pflanzmaterial reichenden Pfanzstab am Rand eines Pflanztopfes haltenden Halterung, wobei der Pflanzstab im Bereich des Randes des Pflanztopfes in zwei im Winkel zueinander stehenden Richtungen gegen den Rand des Pflanztopfes abgestützt ist, zur Abstützung des Pflanzstabes zwei im Bereich des Randes des Pflanztopfes befestigbare Haltestäbe vorgesehen sind und der Pflanzstab an den Haltestäben mittels einer Fixiereinrichtung fixierbar ist.

Pflanzstäbe, die Topfpflanzen stützen sollen, werden üblicherweise in das Pflanzmaterial, wie in Topferde bzw. bei Hydrokulturen in Hydro-Material, gesteckt. Die Pflanzstäbe können sich mit der Zeit lockern und bilden dann keine zuverlässige Stütze mehr für die Pflanze. Dies ist verstärkt der Fall, wenn die Pflanze in eine bestimmte Richtung wächst. Ein Lockern des Stabes kann aber auch beim Transport der Topfpflanze und vor allem auch im Außenbereich, wenn die Topfpflanze dem Wind und Wetter ausgesetzt ist, auftreten.

Zur Lösung dieses Problems hat man versucht, die Pflanzstäbe über Schnüre oder Drähte mittels in eine benachbarte Wand geschlagener Nägel zu befestigen. Hierbei stellt sich das Problem, daß die Topfpflanze dann nicht mehr verstellt bzw. gewendet werden kann.

Um den Pflanzstab gegenüber dem Pflanztopf zu fixieren, ist es bekannt (CH-A - 636.748), am Rand des Pflanztopfes eine Schraubzwinge zu befestigen, von der aus ein gegen das Zentrum des Pflanztopfes gerichtete Schiene ausgeht, wobei die Schiene mittels der Schraubzwinge gegen den Rand des Pflanztopfes gepreßt wird. An dieser Schiene ist mittels einer weiteren Schraubzwinge der Pflanzstab befestigbar.

Diese bekannte Einrichtung weist jedoch den Nachteil auf, daß sich der Pflanzstab nach wie vor zur Seite neigen kann, da von der Pflanze auf den Pflanzstab wirkende Kräfte lediglich in Richtung der Schiene verlaufen dürfen, um von diesem in den Pflanztopf weitergeleitet werden zu können.

Eine Pflanzstab-Fixiereinrichtung, mit der auf den Pflanzstab von allen Richtungen wirkende Kräfte in den Pflanztopf eingeleitet werden können, ist aus der CH-A - 408.516 bekannt. Gemäß diesem Dokument ist ein am Rand des Pflanztopfes festklemmbarer Träger vorgesehen, der einen in Richtung zum Zentrum des Pflanztopfes ragenden rohrartig ausgebildeten Tragarm aufweist. In diesen Tragarm ist ein Tragzapfen einsetzbar und fixierbar, wobei der Tragzapfen gegenüber dem Tragarm in radialer Richtung des Pflanztopfes verschiebbar ist. Dieser

Tragzapfen trägt an seinem inneren d.h. zum Zentrum des Pflanztopfes gerichteten Ende, eine am unteren Ende geschlossene Hülse, in die der Pflanzstab einsetzbar ist. Hierbei kommt der Pflanzstab zwar nicht mit dem Erdreich der Topfpflanze in Berührung, es werden jedoch über den Pflanzstab sehr große Kräfte über den Tragzapfen in den am Rand des Pflanztopfes festklemmbaren Tragarm eingeleitet, so daß dieser dementsprechend starr und klobig ausgebildet sein muß. Diese bekannte Pflanzstab-Fixiereinrichtung ist nicht nur sehr aufwendig in der Konstruktion und dementsprechend teuer in der Herstellung, sondern sie beeinträchtigt durch die sperrige und klobige Ausbildung den Anblick der Topfpflanze. Zudem werden sämtliche Kräfte ausschließlich an den Rand des Pflanztopfes weitergeleitet, so daß dieser einer sehr hohen Belastung standhalten muß.

Eine Pflanzstab-Fixiereinrichtung der eingangs beschriebenen Art ist aus der FR-A - 2541 076 bekannt. Hierbei sind zwei am Topfrand aufsetzbare Klammern vorgesehen, die jeweils eine in Richtung zum Zentrum des Topfes weisende Verlängerung aufweisen, die als Führungsschiene für jeweils eine entlang dieser Führungsschiene je nach Topfdurchmesser verstellbare Stange dient. Die beiden Stangen sind an einem einen Pflanzstab stützenden Rohr starr befestigt. Von dem den Pflanzstab stützenden Rohr gehen somit zwei im unveränderbaren Winkel zueinander stehende Stangen aus, so daß der Abstand, in dem die Klammern am Topfrand zu befestigen sind, starr vorgegeben ist.

Aus der EP-A - 0 058 738 ist eine Pflanzstab-Fixiereinrichtung bekannt, die von einer einzigen an einem Topfrand befestigbaren Klemme gebildet wird, von der ein Haltestab in Richtung zum Zentrum des Topfes ragt. Der Haltestab trägt an seinem Ende einen unten geschlossenen Rohrfortsatz, in den der Pflanzstab einsetzbar ist. Zwischen der Klemme und dem Haltestab ist eine Schwachstelle vorgesehen, so daß der Haltestab in einer vertikal ausgerichteten Ebene um diese Schwachstelle, die als horizontal ausgerichtete Gelenkstelle wirkt, verschwenkbar ist.

Die Erfindung bezweckt die Vermeidung der geschilderten Nachteile und Schwierigkeiten und stellt sich die Aufgabe, eine Pflanzstab-Fixiereinrichtung der eingangs beschriebenen Art dahingehend weiterzuentwickeln, daß der Pflanzstab zuverlässig und sicher gegenüber dem Pflanztopf fixiert ist, wobei ein Lockern des Pflanzstabes auch nach längerer Zeit nicht auftritt. Insbesondere soll die Pflanzstab-Fixiereinrichtung aus wenigen Teilen bestehen, einfach und kostengünstig herstellbar sein und auch das Aussehen des Pflanztopfes nach Anbringung nur sehr wenig stören. d.h. daß die Pflanzstab-Fixiereinrichtung optisch gegenüber der Pflanze stark zurücktritt, also nur schwer wahrnehmbar ist. Die auf den Pflanztopf über den Pflanzstab einwirkenden Kräfte sollen den Pflanztopf möglichst gleichmäßig belasten. Insbesondere soll eine einfache Anpassung der Einrichtung an unterschiedlich gestaltete Pflanztöpfe, wie unterschiedliche Neigungen der Seitenwände von Pflanztöpfen, unterschiedliche Durchmesser und unterschiedliche Querschnittsformen der Pflanztöpfe, möglich sein.

Diese Aufgabe wird erfindungsgemäß dadurch gelöst, daß jeder der beiden Haltestäbe eine eine Beweglichkeit des in das Innere des Pflanztopfes ragenden Haltestabteiles gegenüber dem Rand des Pflanztopfs in allen Richtungen zulassende Gelenkstelle aufweist.

Ein besonders großer Einsatzbereich ist für die erfindungsgemäße Einrichtung gegeben, wenn die Gelenkstelle eine Beweglichkeit um einen Winkel bis etwa 45° in allen Richtungen zuläßt.

Gemäß einer zweckmäßigen Ausführungsform sind an dem Rand eines Pflanztopfes befestigbare Klemmen vorgesehen, die jeweils mittels eines Gewindes am Rand des Pflanztopfes befestigbar sind.

Eine ksotengünstige Ausführungsform ist dadurch gekennzeichnet, daß jeder Haltestab mit einem an einem seiner Enden vorgesehenen Gewinde unter Fixierung der Klemme am Rand des Pflanztopfes einschraubbar ist, wobei vorteilhaft die Gelenkstelle nahe dem Gewinde vorgesehen ist.

Zweckmäßist ist hierbei jeder Haltestab unter Fixierung der Klemme mittels des hinteren Gewindeendes am Rand des Pflanztopfes in die Klemme einschraubbar.

Eine bevorzugte Ausführungsform ist dadurch gekennzeichnet, daß jede Klemme U-förmig ausgebildet ist und mit einem Schenkel an der Außenseite des Pflanztopfes anliegt und mit dem zweiten Schenkel in das Innere des Pflanztopfes ragt, wobei der zweite Schenkel mit einem Gewindeloch versehen ist, in das der Haltestab mit einem an einem seiner Enden vorgesehenen Gewinde unter Fixierung der Klemme mittels des hinteren Gewindeendes am Rand des Pflanztopfes einschraubbar ist. Bei dieser Ausführungsform dient der Haltestab nicht nur zum Halten des Pflanzstabes, sondern auch zur Fixierung der Einrichtung am Rand des Pflanztopfes, was eine besonders einfache Konstruktion mit nur wenigen Teilen erlaubt.

Um die Einrichtung auch an Pflanztöpfen mit nur dünner Wandstärke befestigen zu können, weist das am Haltestab vorgesehene Gewinde eine Länge auf, die so bemessen ist, daß bei maximal in den Schenkel der Klemme eingeschraubtem Haltestab das hintere Gewindeende im Bereich des zweiten Schenkels der Klemme liegt.

Zwecks einfacher Handhabung der Einrichtung ist der Haltestab mit einer Rändelscheibe versehen, die vorzugsweise im Bereich des vorderen Endes des Gewindes plaziert ist

Vorzugsweise ist die Gelenkstelle, die vorzugsweise im Anschluß an die Rändelscheibe vorgesehen ist, als ein Biegen des Haltestabes ermöglichende Schwachstelle ausgebildet.

Eine besonders kostengünstige Ausführungsform der Erfindung ist dadurch gekennzeichnet, daß die Fixiereinrichtung von einem Kabelbinder gebildet ist. Kabelbinder stellen einen leicht herstellbaren und infolge von Massenproduktion sehr billigen Teil großer Festigkeit dar.

Vorzugsweise ist der ins Innere des Pflanztopfes ragende Schenkel der Klemme mit mindestens zwei höhenmäßig übereinander angeordneten Gewindelöchern versehen, wodurch es möglich ist, die Haltestäbe in unterschiedlichen Höhen vorzusehen, was bei wulstartigen Rändern von Pflanztöpfen von Vorteil sein kann.

Um eine Langlebigkeit trotz einfacher Herstellungsweise der Einrichtung sicherzustellen, ist zweckmäßig die Klemme aus Kunststoff, wie glasfaserverstärktem Kunststoff, vorzugsweise Polyesterharz, gebiklet, wobei vorteilhaft der Haltestab und auch der Kabelbinder aus einem UV-beständigen Polyamid gebildet sind.

Zwecks Erzielens einer besonders guten Fixierung ist vorteilhaft der Haltestab an seinem in das Innere des Pflanzentopfes ragenden Bereich mit Oberflächenrauhigkeiten, wie Rillen oder Rippen, versehen.

Weiters ist eine besonders hohe Stabilität dadurch zu erreichen, daß zwei Kabelbinder als Fixiereinrichtung vorgesehen sind, wobei ein Kabelbinder sowohl um die beiden Haltestäbe als auch den Pflanzenstab geschlungen ist und der zweite Kabelbinder nur um die Haltestäbe im Kreuzungsbereich derselben geschlungen ist.

Zwecks einfacher Hundhabung ist die Pflanzstab-Fixiereinrichtung vorteilhaft eine als Set, gebildet von zwei U-förmigen Klemmen, zwei mit jeweils an einem Ende mit einem Gewinde versehenen Haltestäben und mindestens einem Kabelbinder, abgepackte Einheit.

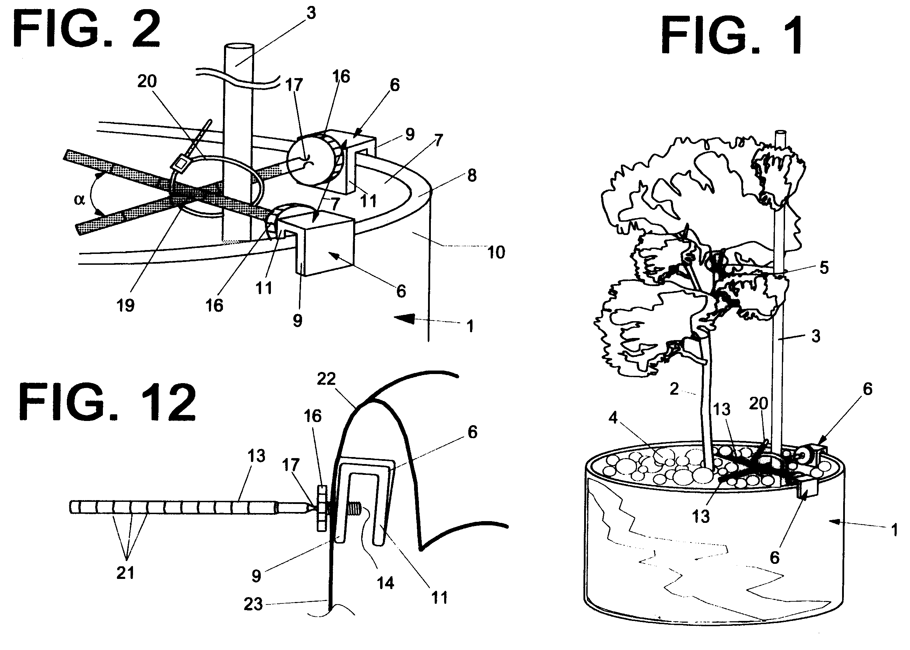

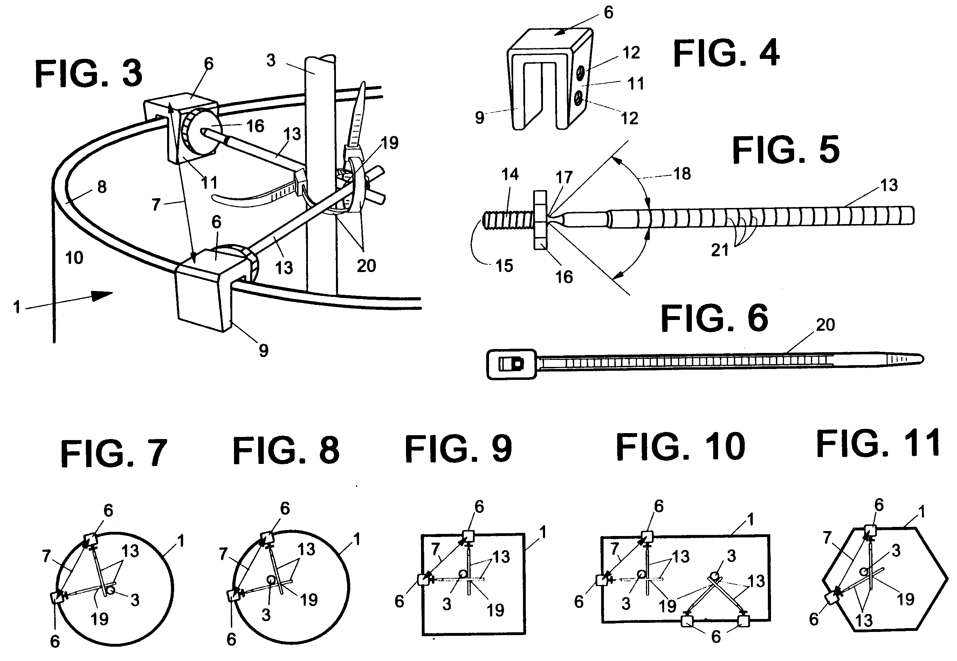

Die Erfindung ist nachfolgend anhand der Zeichnung näher erläutert, wobei Fig. 1 die Ansicht einer Topfpflanze mit einer erfindungsgemäß Pflanzstab-Fixiereinrichtung und Fig. 2 ein Detail dieser Fig. 1 im vergrößerten Maßstab zeigt. Fig. 3 stellt eine bevorzugte Variante dar. Die Fig. 4, 5 und 6 veranschaulichen die Einzelteile einer erfindungsgemäßen Pflanzstab-Fixiereinrichtung, und die Fig. 7 bis 12 zeigen die Anwendung derselben für unterschiedliche Pflanztöpfe.

In einem Pflanztopf 1 ist eine Topfpflanze 2 eingesetzt, die von einem Pflanzstab 3, der mit seinem unteren Ende in das im Pflanztopf 1 vorhandene Pflanzmaterial 4, z.B. Erdreich, ragt, gestützt ist Die Topfpflanze 2 ist am Pflanzstab 3 festgebunden, beispielsweise mittels einer Schnur 5 etc..

Die Pflanzstab-Fixiereinrichtung weist zwei U-förmig ausgebildete Klemmen 6 auf, die im Abstand 7 voneinander am Rand 8 des Pflanztopfes 1 befestigbar sind, u.zw. derart, daß jede Klemme 6 mit einem Schenkel 9 an der Außenseite 10 des Pflanztopfes 1 liegt und mit dem zweiten Schenkel 11 in das Innere des Pflanztopfes 1 ragt. Der zweite Schenkel 11 ist mit einem Gewindeloch 12 versehen, in das ein Haltestab 13 mit einem an einem seiner Enden vorgesehenen Gewinde 14 einschraubbar ist. Das hintere Gewindeende 15 bewirkt die Fixierung der Klemme 6 um Rand 8 des Pflanztopfes 1.

Zum Einschrauben des Haltestabes 13 in das Gewindeloch 12 der Klemme 6 dient eine am vorderen Gewindeende plazierte Rändelschraube 16, wodurch sich eine leichte Handhabbarkeit ergibt. Unmittelbar benachbart zur Rändelschraube 16 ist eine Schwachstelle 17 des Haltestabes 13 vorgesehen, so daß dieser gemäß den in Fig. 5 eingezeichneten Pfeilen 18 gegenüber dem das Gewinde 14 tragenden Teil abbiegbar ist.

Die Pflanzstab-Fixiereinrichtung wird am Rand 8 des Pflanztopfes 1 so angeordnet, daß die Haltestäbe 13 einen Winkel α miteinander einschließen, der zweckmäßig in einem Bereich zwischen 60 und 120° liegt, vorzugsweise etwa 90° beträgt. Der Pflanzstab 3 kommt im Bereich des Kreuzungspunktes 19 der beiden Haltestäbe 13 zu liegen. Nach Festschrauben der Haltestäbe 13 in den am Rund 8 aufgesetzten Klemmen 6 wird, wie inbesondere aus Fig. 2 zu ersehen ist, um den Pflanzstab 3 und um die beiden einander kreuzenden Haltestäbe 13 ein Kabelbinder 20 geschlungen, und es wird zunächst durch leichtes Festziehen desselben der Pflanzstab 3 gegenüber den Haltestäben 13 fixiert. Nach Ausrichten des Pflanzstabes 3 in seine gewünschte endgültige Position wird der Kabelbinder 20 festgezogen. Dadurch wird der Pflanzstab 3 so fest an die Haltestäbe 13 gepreßt, daß ein horizontales Bewegen, d.h. ein Bewegen des Pflanzstabes 3 in Richtung der Ebene des Randes 8 des Pflanztopfes 1, nicht mehr möglich ist. Da der Pflanzstub 3 mit seinem unteren Ende in das Pflanzmaterial 4 ragt, kann er auch nicht mehr verschwenkt werden; das Erd- bzw. Hydromaterial 4 im Pflanztopf 1 bietet den sicheren Halt am Topfboden.

Die Pflanzstab-Fixiereinrichtung ist zur Gänze aus Kunststoff gefertigt, wobei die Klemmen 6 vorzugsweise aus glasfuserverstärktem Polyesterharz und die Haltestäbe 13 vorzugsweise aus Nylon hergestellt sind. Beim Kabelbinder 20 handelt es sich um ein handelsübliches Produkt der Elektrobranche, das ebenfalls aus Nylon besteht. Die Klemmen 6 können auch aus Metall, vorzugsweise aus Aluminium, hergestellt sein, was insbesondere für größere Dimensionen zur Verwendung bei Pflanztöpfen 1 mit dicken Rändern 8 von Vorteil ist.

Die Haltestäbe 13 können mit Sollbruchstellen versehen sein, um sie auf die gewünschte Länge verkürzen zu können.

Wie insbesondere aus Fig. 4 ersichtlich ist, weist die Klemme 6 zwei in Längsrichtung des zweiten Schenkels 11 hintereinander angeordnete Gewindelöcher 12 auf, und es kann der Haltestab 13 wahlweise in eines dieser Gewindelöcher 12 eingesetzt werden. Die Wahl des Gewindeloches 12 richtet sich nach der Ausgestaltung des Randes 8 des Pflanztopfes 1.

Die Haltestäbe 13 sind vorteilhaft mit Oberflächenrauhigkeiten 21 versehen, um die Haltekräfte zwischen Haltestäben 13, Kabelbinder 20 und Pflanzstab 3 zu vergrößern.

Eine besonders hohe Stabilität läßt sich dadurch erreichen, daß zur Fixierung des Pflanzstabes 3 zwei kabelbinder 20 verwendet werden, wobei - wie in Fig. 3 dargestellt - ein Kabelbinder 20 sowohl um die beiden Haltestäbe 13 als auch den Pflanzenstab 3 geschlungen ist und der zweite Kabelbinder 20 nur um die Haltestäbe 13 im Kreuzungsbereich 19 derselben geschlungen ist.

Wie die Fig. 7 bis 11 zeigen, ist die Pflanzstab-Fixiereinrichtung an alle gängigen Pflanztöpfe 1 anpaßbar, wobei aufgrund der Beweglichkeit der Haltestäbe 13 gegenüber dem das Gewinde 14 tragenden Teil eine leichte Montage für alle gängigen Pflanztopftypen gewährleistet ist.

In Fig. 12 ist eine Anordnung für mit einem großen Wulstrand 22 versehene Pflanztöpfe 1 gezeigt. Hierbei ist in die Wand 23 des Pflanztopfes ein Loch zu bohren, durch das der Haltestab 13 mit seinem Gewinde 14 gesteckt wird. Die Klemme 6 wird dann wie eine Mutter aufgeschraubt.

Wesentlich für die Pflanzstub-Fixiereinrichtung ist die Dreipunktfixierung des Systems in Höhe des Randes 8 des Pflanztopfes 1 in Kombination mit der Fixierung des unteren Endes des Pflanzstabes 3 im Pflanzmaterial 4.

## Patentansprüche

1. Pflanzstab-Fixiereinrichtung, mit einer einen ins Pflanzmaterial (4) reichenden Pflanzstab (3) am Rand (8) eines Pflanztopfes (1) haltenden Halterung (6, 13, 20), wobei der Pflanzstab (3) im Bereich des Randes (8) des Pflanztopfes (1) in zwei im Winkel (α) zueinander stehenden Richtungen gegen den Rand (8) des Pflanztopfes (1) abgestützt ist, zur Abstützung des Pflanzstabes (3) zwei im Bereich des Randes (8) des Pflanztopfes (1) befestigbare Haltestäbe (13) vorgesehen sind und der Pflanzstab (3) an den Haltestäben (13) mittels einer Fixiereinrichtung (20) fixierbar ist dadurch gekennzeichnet, daß jeder der beiden Haltestäbe (13) eine eine Beweglichkeit des in das Innere des Pflanztopfes (1) ragenden Haltestabteiles gegenüber dem Rand (8) des Pflanztopfes (1) in allen Richtungen zulassende Gelenkstelle (17) aufweist.

2. Pflanzstab-Fixiereinrichtung nach Anspruch 1, dadurch gekennzeichnet, daß die Gelenkstelle (17) eine Beweglichkeit um einen Winkel bis etwa 45° in allen Richtungen zuläßt.

3. Pflanzstub-Fixiereinrichtung nach Anspruch 1 oder 2, dadurch gekennzeichnet, daß zwei an dem Rand (8) eines Pflanztopfes (1) befestigbare Klemmen (6) vorgesehen sind, die jeweils mittels eines Gewindes am Rand (8) des Pflanztopfes (1) befestigbar sind.

4. Pflanzstab-Fixiereinrichtung nach Anspruch 3, dadurch gekennzeichnet, daß jeder Haltestab (13) mit einem an einem seiner Enden vorgesehenen Gewinde (14) unter Fixierung der Klemme (6) am Rand (8) des Pflanztopfes (1) einschraubbar ist.

5. Pflanzstab-Fixiereinrichtung nach Anspruch 4, dadurch gekennzeichnet, daß die Gelenkstelle (17) nahe dem Gewinde (14) vorgesehen ist.

6. Pflanzstab-Fixiereinrichtung nach Anspruch 4 oder 5, dadurch gekennzeichnet, daß jeder Haltestab unter Fixierung der Klemme mittels des hinteren Gewindeendes am Rand (8) des Pflanztopfes (1) in die Klemme einschraubbar ist.

7. Pflanzstab-Fixiereinrichtung nach einem oder mehreren der Ansprüche 3 bis 6, dadurch gekennzeichnet, daß jede Klemme (6) U-förmig ausgebildet ist und mit einem Schenkel (9) an der Außenseite (10) des Pflanztopfes (1) anliegt und mit dem zweiten Schenkel (11) in das Innere des Pflanztopfes (1) ragt, wobei der zweite Schenkel (11) mit einem Gewindeloch (12) versehen ist, in das der Haltestab (13) mit einem an einem seiner Enden vorgesehenen Gewinde (14) unter Fixierung der Klemme (6) mittels des hinteren Gewindeendes (15) am Rand (8) des Pflanztopfes (1) einschraubbar ist.

8. Pflanzstab-Fixiereinrichtung nach Anspruch 7, dadurch gekennzeichnet, daß das am Haltestab (13) vorgesehene Gewinde (14) eine Länge aufweist, die so bemessen ist, daß bei maximal in den Schenkel (11) der Klemme (6) eingeschraubtem Haltestab (13) das hintere Gewindeende (15) im Bereich des zweiten Schenkels (9) der Klemme (6) liegt.

9. Pflanzstab-Fixiereinrichtung nach einem oder mehreren der Ansprüche 4 bis 8, dadurch gekennzeichnet, daß der Haltestab (13) mit einer Rändelscheibe (16) versehen ist, die vorzugsweise im Bereich des vorderen Endes des Gewindes (14) plaziert ist.

10. Pflanzstab-Fixiereinrichtung nach einem oder mehreren der Ansprüche 1 bis 9, dadurch gekennzeichnet, daß die Gelenkstelle (17), die vorzugsweise im Anschluß an die Rändelscheibe (16) vorgesehen ist, als ein Biegen des Haltestabes (13) ermöglichende Schwachstelle (17) ausgebildet ist.

11. Pflanzstab-Fixiereinrichtung nach einem oder mehreren der Ansprüche 1 bis 10, dadurch gekennzeichnet, daß die Fixiereinrichtung von einem Kabelbinder (20) gebildet ist.

12. Pflanzstab-Fixiereinrichtung nach einem oder mehreren der Ansprüche 7 bis 11, dadurch gekennzeichnet, daß der ins Innere des Pflanztopfes (1) ragende Schenkel (11) der Klemme (6) mit mindestens zwei höhenmäßig übereinander angeordneten Gewindelöchern (12) vergehen ist.

13. Pflanzstab-Fixiereinrichtung nach einem oder mehreren der Ansprüche 3 bis 12, dadurch gekennzeichnet, daß die Klemme (6) aus Kunststoff, wie glasfaserverstärktem Kunststoff, vorzugsweise Polyesterharz, gebildet ist.

14. Pflanzstab-Fixiereinrichtung nach einem oder mehreren der Ansprüche 1 bis 13, dadurch gekennzeichnet, daß der Haltestab (13) aus einem UV-beständigen Polyamid gebildet ist.

15. Pflanzstab-Fixiereinrichtung nach einem oder mehreren der Ansprüche 1 bis 14, dadurch gekennzeichnet, daß die Fixiereinrichtung (20), wie der Kabelbinder, aus einem UV-beständigen Polyamid gebildet ist.

16. Pflanzstab-Fixiereinrichtung nach einem oder mehreren der Ansprüche 1 bis 15, dadurch gekennzeichnet, daß der Haltestab (13) an seinem in das Innere des Pflanzentopfes ragenden Bereich mit Oberflächenrauhigkeiten (21), wie Rillen oder Rippen, versehen ist,

17. Pflanzstab-Fixiereinrichtung nach einem oder mehreren der Ansprüche 1 bis 16, dadurch gekennzeichnet, daß zwei Kabelbinder (20) als Fixiereinrichtung vorgesehen sind, wobei ein Kabelbinder (20) sowohl um die beiden Haltestäbe (13) als auch den Pflanzenstab (3) geschlungen ist und der zweite Kabelbinder (20) nur um die Haltestäbe (13) im Kreuzungsbereich (19) derselben geschlungen ist.

18. Pflanzstab-Fixiereinrichtung nach einem oder mehreren der Ansprüche 3 bis 17, gekennzeichnet durch eine als Set, gebildet von zwei U-förmigen Klemmen (6), zwei mit jeweils an einem Ende mit einem Gewinde (14) versehenen Haltestäben (13) und mindestens einem Kabelbinder (20), abgepackte Einheit.

## Claims

1. Fixing device for a plant stake, comprising a holding device (6, 13, 20) for holding a plant stake (3) extending into the planting material (4) to the rim (8) of a plant container (1), wherein the plant stake (3) in the region of the rim (8) of the plant container (1) is supported against the rim (8) of the plant container (1) in two directions forming an angle (α) with one another, two retaining bars (13) are provided which are affixable in the region of the rim (8) of the plant container (1) in order to support the plant stake (3), and the plant stake (3) can be fixed to the retaining bars (13) by a fixing device (20), characterized in that each of the two retaining bars (13) is provided with an articulated point (17) enabling the portion of the retaining bar projecting inside the plant container (1) to be movable relative to the rim (8) of the plant container (1) in all directions.

2. Fixing device for a plant stake according to claim 1, characterized in that the articulated point (17) allows movability about an angle of roughly up to 45° in all directions.

3. Fixing device for a plant stake according to claim 1 or 2, characterized in that two clamps (6) are provided which can be affixed to the rim (8) of a plant container (1), each of them being affixable to the rim (8) of the plant container (1) by means of a screw thread.

4. Fixing device for a plant stake according to claim 3, characterized in that each retaining bar (13) can be screwed in by a screw thread (14) provided at one of its ends, fixing the clamp (6) to the rim (8) of the plant container (1).

5. Fixing device for a plant stake according to claim 4, characterized in that the articulated point (17) is provided in the vicinity of the screw thread (14).

6. Fixing device for a plant stake according to claim 4 or 5, characterized in that each retaining bar can be screwed into the clamp by the back end of the screw thread, fixing the clamp to the rim (8) of the plant container (1).

7. Fixing device for a plant stake according to one or several of claims 3 to 6, characterized in that each clamp (6) is of U-shaped design and by one leg (9) rests against the exterior (10) of the plant container (1) and by its second leg (11) projects inside the plant container (1), the second leg (11) being provided with a threaded hole (12) into which the retaining bar (13) can be screwed by a screw thread (14) provided at one of its ends, fixing the clamp (6) to the rim (8) of the plant container (1) by the back end of the screw thread (15).

8. Fixing device for a plant stake according to claim 7, characterized in that the length of the screw thread (14) provided on the retaining bar (13) is dimensioned such that with the retaining bar (13) being screwed into the leg (11) of the clamp (6) to a maximum extent, the back end of the screw thread (15) will occupy a position in the region of the second leg (9) of the clamp (6).

9. Fixing device for a plant stake according to one or several of claims 4 to 8, characterized in that the retaining bar (13) is provided with a knurled disk (16) preferably arranged in the region of the front end of the screw thread (14).

10. Fixing device for a plant stake according to one or several of claims 1 to 9, characterized in that the articulated point (17) preferably provided adjacent to the knurled disk (16) is constructed as a weak spot (17) enabling bending of the retaining bar (13).

11. Fixing device for a plant stake according to one or several of claims 1 to 10, characterized in that the fixing device is formed by a cable fastening loop (20).

12. Fixing device for a plant stake according to one or several of claims 7 to 11, characterized in that the leg (11) of the clamp (6) that projects inside the plant container (1) is provided with at least two threaded holes (12) arranged at superposed height levels.

13. Fixing device for a plant stake according to one or several of claims 3 to 12, characterized in that the clamp (6) is made from synthetic material, such as glass-fiber reinforced synthetic material, preferably polyester resin.

14. Fixing device for a plant stake according to one or several of claims 1 to 13, characterized in that the retaining bar (13) is made from a UV resistant polyamide.

15. Fixing device for a plant stake according to one or several of claims 1 to 14, characterized in that the fixing device (20), such as the cable fastening loop, is made from a UV resistant polyamide.

16. Fixing device for a plant stake according to one or several of claims 1 to 15, characterized in that the retaining bar (13) is provided with surface roughnesses (21), such as grooves or ribs, at the region by which it projects inside the plant container.

17. Fixing device for a plant stake according to one or several of claims 1 to 16, characterized in that two cable fastening loops (20) are provided as a fixing device, wherein one cable fastening loop (20) is wound both around the two retaining bars (13) and the plant stake (3) and the second cable fastening loop (20) is only wound around the retaining bars (13), in the intersection area (19) of the same.

18. Fixing device for a plant stake according to one or several of claims 3 to 17, characterized by a unit packed as a set, consisting of two U-shaped clamps (6), two retaining bars (13) provided with a screw thread (14) at one end each and at least one cable fastening loop (20).

## Revendications

1. Dispositif de fixation pour tige de support de plante, comportant une fixation (6, 13, 20) maintenant une tige support de plante (3), allant à l'intérieur du matériau végétal (4), sur le bord (8) d'un pot de plantation (1), où la tige support de plante (3) est soutenue dans la zone du bord (8) du pot de plantation (1) dans deux directions, faisant entre elles un angle (α), contre le bord (8) du pot de plantation (1), deux tiges de maintien (13), susceptibles d'être fixées dans la zone du bord (8) du pot de plantation (1), étant prévues en vue de soutenir la tige support de plante (3) et la tige support de plante (3) étant susceptible d'être fixée sur les tiges de maintien (13), au moyen d'un dispositif de fixation (20), caractérisé en ce que chacune des deux tiges de maintien (13) présente un point d'articulation (17) permettant une mobilité dans toutes les directions de la partie de tige de maintien pénétrant à l'intérieur du pot de plantation (1), par rapport au bord (8) du pot de plantation (1).

2. Dispositif de fixation pour tige de support de plante selon la revendication 1, caractérisé en ce que le point d'articulation (17) permet une mobilité d'amplitude angulaire allant jusqu'à environ 45° dans toutes les directions.

3. Dispositif de fixation pour tige de support de plante selon la revendication 1 ou 2, caractérisé en ce que sont prévues deux pinces (6) susceptibles d'être fixées sur le bord (8) d'un pot de plantation (1), chaque pince étant susceptible d'être fixée sur le bord (8) du pot de plantation (1) au moyen d'un filetage.

4. Dispositif de fixation pour tige de support de plante selon la revendication 3, caractérisé en ce que chaque tige de maintien (13) est susceptible d'être vissée sur le bord (8) du pot de plantation (1), par un filetage (14) prévu à une de ses extrémités, ceci s'accompagnant d'une fixation de la pince (6).

5. Dispositif de fixation pour tige de support de plante selon la revendication 4, caractérisé en ce que le point d'articulation (17) est prévu près du filetage (14).

6. Dispositif de fixation pour tige de support de plante selon la revendication 4 ou 5, caractérisé en ce que chaque tige de maintien est susceptible d'être vissée sur le bord (8) du pot de plantation (1), dans la pince, au moyen de l'extrémité arrière du filetage, ceci s'accompagnant d'une fixation de la pince.

7. Dispositif de fixation pour tige de support de plante selon l'une ou plusieurs des revendications 3 à 6, caractérisé en ce que chaque pince (6) est réalisée en forme de U et appuie, par une branche (9), sur la face extérieure (10) du pot de plantation (1) et pénètre, par la deuxième branche (11), à l'intérieur du pot de plantation (1), la deuxième branche (11) étant dotée d'un trou taraudé (12) dans lequel la tige de maintien (13) est susceptible d'être vissée, par un filetage (14) prévu à une de ses extrémités, sur le bord (8) du pot de plantation (1), au moyen de l'extrémité arrière (15) du filetage, ceci s'accompagnant d'une fixation de la pince (6).

8. Dispositif de fixation pour tige de support de plante selon la revendication 7, caractérisé en ce que le filetage (14) prévu sur la tige de maintien (13) est d'une longueur telle que, lorsque la tige de maintien (13) est vissée d'une longueur maximale dans la branche (11) de la pince (6), l'extrémité arrière (15) de filetage est située dans la zone de la deuxième branche (9) de la pince (6).

9. Dispositif de fixation pour tige de support de plante selon l'une ou plusieurs des revendications 4 à 8, caractérisé en ce que la tige de maintien (13) est dotée d'un disque moleté (16), placé de préférence dans la zone de l'extrémité avant du filetage (14).

10. Dispositif de fixation pour tige de support de plante selon l'une ou plusieurs des revendications 1 à 9, caractérisé en ce que le point d'articulation (17), prévu de préférence connexe au disque moleté (16), est réalisé sous la forme d'un point d'affaiblissement (17) permettant une flexion de la tige de maintien (13).

11. Dispositif de fixation pour tige de support de plante selon l'une ou plusieurs des revendications 1 à 10, caractérisé en ce que le dispositif de fixation est constitué par un lien pour câble (20).

12. Dispositif de fixation pour tige de support de plante selon l'une ou plusieurs des revendications 7 à 11, caractérisé en ce que la branche (11), pénétrant à l'intérieur du pot de plantation (1), de la pince (6) est dotée d'au moins deux trous taraudés (12) disposés l'un au-dessus de l'autre en hauteur.

13. Dispositif de fixation pour tige de support de plante selon l'une ou plusieurs des revendications 3 à 12, caractérisé en ce que la pince (6) est réalisée en matière synthétique, telle que de la matière plastique renforcée par des fibres de verre, de préférence de la résine polyester.

14. Dispositif de fixation pour tige de support de plante selon l'une ou plusieurs des revendications 1 à 13, caractérisé en ce que la tige de maintien (13) est constituée d'un polyamide résistant aux UV.

15. Dispositif de fixation pour tige de support de plante selon l'une ou plusieurs des revendications 1 à 14, caractérisé en ce que le dispositif de fixation (20), tout comme le lien pour câble, est constitué d'un polyamide résistant aux UV.

16. Dispositif de fixation pour tige de support de plante selon l'une ou plusieurs des revendications 1 à 15, caractérisé en ce que la tige de maintien (13) est dotée sur sa zone pénétrant à l'intérieur du pot de plantation de rugosités de surface (21) telles que des cannelures ou des nervures.

17. Dispositif de fixation pour tige de support de plante selon l'une ou plusieurs des revendications 1 à 16, caractérisé en ce que deux liens pour câble (20) sont prévus comme dispositif de fixation, un premier lien pour câble (20) étant enlacé tant autour des deux tiges de maintien (13) qu'également de la tige support de plante (3), et le deuxième lien pour câble (20) étant enlacé seulement autour des tiges de maintien (13), dans la zone de croisement (19) de celle-ci.

18. Dispositif de fixation pour tige de support de plante selon l'une ou plusieurs des revendications 3 à 17, caractérisé par un ensemble emballé pour former un jeu d'éléments, constitué de deux pinces en forme de U (6), de deux tiges de maintien (13) dotées chacune à une extrémité d'un filetage (14) et d'au moins un lien pour câble (20).
